# EUROPEAN PATENT SPECIFICATION

(11) **EP 3 177 043 B1**
(45) Date of publication and mention of the grant of the patent: **16.06.2021**
(21) Application number: 16201002.9
(22) Date of filing: 28.11.2016
(51) Int. Cl.: H04L 12/24

(54) **METHOD AND APPARATUS FOR MANAGING ROUTING DEVICE AND MOBILE TERMINAL**
VERFAHREN UND VORRICHTUNG ZUM VERWALTEN EINER ROUTINGVORRICHTUNG UND MOBILES ENDGERÄT
PROCÉDÉ ET APPAREIL DE GESTION DE DISPOSITIF DE ROUTAGE ET DE TERMINAL MOBILE

(30) Priority: 01.12.2015 CN 201510868437
(43) Date of publication of application: 07.06.2017
(73) Proprietor: Xiaomi Inc., Beijing 100085 (CN)
(72) Inventor: QIAN, Zhuang, Haidian District, Beijing 100085 (CN); CHEN, Yong, Haidian District, Beijing 100085 (CN); WANG, Yidong, Haidian District, Beijing 100085 (CN)
(74) Representative: Nevett, Duncan

(56) References cited:
- WO-A1-2015/172632
- CN-A- 103 873 359
- CN-A- 104 010 309

## Description

### TECHNICAL FIELD

The present disclosure generally relates to the field of Internet technologies, and more particularly, to a method and apparatus for managing a routing device, and a mobile terminal.

### BACKGROUND

Routing devices not only have a function of network connection, but also can realize intelligent management. For example, users can manage the routing devices through mobile terminals, and can also access data stored in the routing devices.

For a user having a plurality of routing devices, the plurality of routing devices can be displayed in a routing management list of a mobile terminal. At present, a mobile terminal generally manages the first routing device in the routing management list, or manages the last used routing device by default. Thus, when the mobile terminal moves from one place to another, the user needs to switch a routing device managed, by the mobile terminal, to a routing device in the current place manually.

For example, the user has two routing devices, a first routing device is installed in an office, and a second routing device is installed in the user's home. When the user is at his/her company, he/she can access office documents stored in the first routing device through the mobile terminal; and when the user returns home, he/she needs to switch a routing device managed, by the mobile terminal, to the second routing device manually to access photos, videos, and the like stored in the second routing device.

CN103873369A discloses a gateway and a method for supporting interaction of a heterogeneous network. The gateway comprises a host and an intelligent switch, wherein the host comprises a sub-network monitoring unit, an internet interaction unit, an intelligent forwarding strategy unit, a first forwarding table unit and a first interface unit, and the intelligent switch comprises a receiving unit, a sending unit, an input selection unit, a data analysis unit, an output port inquiry unit, a second forwarding table unit and a second interface unit. The method comprises the following steps of when the intelligent switch receives data, analyzing the data, and extracting data types, a target IP (internet protocol) and other information; according to the specific data type and the target IP, inquiring the corresponding data forwarding output port of a second forwarding table, and sending to the output port; when the host receives the data, forwarding the data to the corresponding data processing unit to be processed according to the data source port. The gateway and the method can flexibly obtain and forward the data of the internet and the heterogeneous sub-network.

WO2015172632A1 discloses methods and systems for multiple Wireless Fidelity (Wi-Fi) devices automatically connecting to a specified access point (AP). The method includes defining an encryption field in a beacon frame. The encryption field contains connection information of the specified AP defined by a vendor and each of the multiple Wi-Fi devices is from the same vendor. The method also includes assigning respectively a key that decrypts the connection information of the specified AP contained in the encryption field to each Wi-Fi device, and broadcasting the connection information of the specified AP contained in the encryption field of the beacon frame by any AP containing the encryption field. Further, the method includes decrypting the connection information of the specified AP contained in the encryption field of the beacon frame by the multiple Wi-Fi devices having the key, such that the multiple Wi-Fi devices are connected to the specified AP.

### SUMMARY

The invention is defined to the independent claims to which reference is now made. Advantageous features are set out in the dependent claims.

Technical solutions provided by embodiments of the present disclosure may include the following advantageous effects.

In the present disclosure, the user does not need to switch manually, and the routing device managed by the mobile terminal can be automatically switched according to the network connection parameters of the currently connected routing device. Thus, the complexity for managing the routing device can be reduced, thereby resulting in more convenient way for managing the routing device.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of a method for managing a routing device according to an exemplary embodiment.
Fig. 2 is a flow chart of a method for managing a routing device according to an exemplary embodiment.
Fig. 3 is a schematic diagram of a method for managing a routing device according to an exemplary embodiment.
Fig. 4 is a structural block diagram of a mobile terminal according to an exemplary embodiment.
Fig. 5 is a block diagram of an apparatus for managing a routing device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

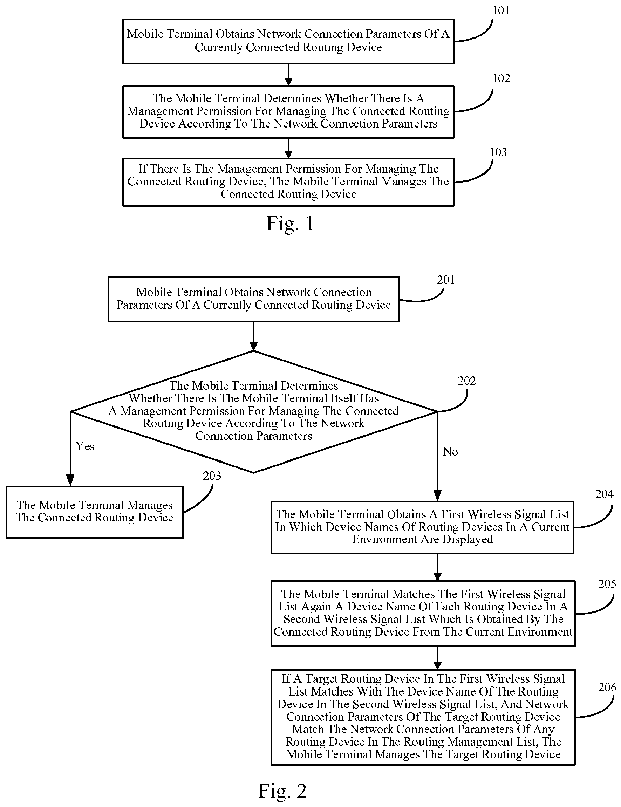

Fig. 1 is a flow chart of a method for managing a routing device according to an exemplary embodiment. As shown in Fig. 1, the method for managing the routing device can be applied in a mobile terminal, and can include the following steps.

In step S101, a mobile terminal obtains network connection parameters of a currently connected routing device.

In step S102, the mobile terminal determines whether there is a management permission for managing the connected routing device according to the network connection parameters.

In step S103, if there is the management permission for managing the connected routing device, the mobile terminal manages the connected routing device.

In the method provided by embodiments of the present disclosure, the user does not need to switch manually, and the routing device managed by the mobile terminal can be automatically switched according to the network connection parameters of the currently connected routing device. Thus, the complexity for managing the routing device can be reduced, thereby resulting in more convenient way for managing the routing device.

In another embodiment of the present disclosure, before determining, by the mobile terminal, whether there is the management permission for managing the connected routing device according to the network connection parameters, the method further includes:

presetting and storing, by the mobile terminal, a routing management list in which network connection parameters of each manageable routing device are identified.

In another embodiment of the present disclosure, the determining, by the mobile terminal, whether there is the management permission for managing the connected routing device according to the network connection parameters includes:
matching, by the mobile terminal, the network connection parameters with the network connection parameters of each manageable routing device in the routing management list respectively; and
if the network connection parameters match with the network connection parameters of any routing device in the routing management list, determining, by the mobile terminal, that there is the management permission for managing the connected routing device.

In another embodiment of the present disclosure, after determining, by the mobile terminal, whether there is the management permission for managing the connected routing device according to the network connection parameters, the method further includes:
if there is not the management permission for managing the connected routing device, obtaining, by the mobile terminal, a first wireless signal list in which device names of routing devices in a current environment are displayed;
matching, by the mobile terminal, the first wireless signal list with a device name of each routing device in a second wireless signal list which is obtained by the connected routing device from the current environment; and
if a target routing device in the first wireless signal list matches with the device name of the routing device in the second wireless signal list, and network connection parameters of the target routing device match with the network connection parameters of any routing device in the routing management list, managing, by the mobile terminal, the target routing device.

In another embodiment of the present disclosure, the network connection parameters include at least a service set identifier SSID and a connection password.

In all of above optional technical solutions, any combination can be used to form optional embodiments of the present disclosure, which will not be elaborated herein.

Fig. 2 is a flow chart of a method for managing a routing device according to an exemplary embodiment. As shown in Fig. 2, the method for managing the routing device can be applied in a mobile terminal, and can include the following steps.

In step S201, a mobile terminal obtains network connection parameters of a currently connected routing device. That is, the mobile terminal obtains network connection parameters of a routing device a routing device that is currently connected to the mobile terminal.

The mobile terminal may be a smart phone, a tablet, a notebook computer, and the like, and the embodiment of the present disclosure does not impose specific limitations on product types of the mobile terminal. The mobile terminal has a network connection function, can receive Wireless Fidelity (WiFi) signals broadcasted by the routing device, and establish a connection with the routing device by inputting corresponding connection password. The routing device may therefore also be called a wireless routing device. That is, a routing device having wireless connection capability. Various applications, such as reader applications, audio applications, video applications, navigation applications, shopping applications, management applications, and the like, are installed in the mobile terminal, and the management application is mainly used for managing the routing device.

The network connection parameters include a SSID and a connection password, and the like, and the embodiment of the present disclosure does not impose specific limitations on the network connection parameters. When the mobile terminal moves from one place to another, the mobile terminal enables a WiFi function to receive WiFi signals broadcasted by a routing device in the current place, so as to establish a connection with the routing device by inputting the connection password. In the above process of establishing the connection with the routing device, the mobile terminal can scan a SSID of the currently connected routing device, and obtain the network connection parameters, such as the connection password.

In step S202, the mobile terminal determines whether there is the mobile terminal itself has a management permission for managing the connected routing device according to the network connection parameters; if the mobile terminal has the management permission for managing the connected routing device, step S203 is performed; and if the mobile terminal does not have the management permission for managing the connected routing device, step S204 is performed. Managing the connected routing device may include managing the operation of the router. For example, this can include any one of: managing the operating parameters of the routing device, managing which devices the routing device is able to connect with, managing the type of connection that the routing device has with other devices, and managing security settings of the routing device.

Since a large number of user data, such as office documents, movies, photos, and the like, is stored in the routing device of the present embodiment, and such data is not open to all users; in order to ensure the security of data stored in the routing device and avoid management of the routing device by any mobile terminal through installed management applications, the method provided by the present disclosure also sets a routing management list before managing the routing device. Network connection parameters of each manageable routing device are identified in the routing management list, so as to determine whether the mobile terminal has a management permission for managing any routing device.

While setting the routing management list, the mobile terminal can provide a setting page of the routing device. The user sets network connection parameters of each manageable routing device on the setting page of the routing device according to usage requirements. The mobile terminal detects user's operation, and set the routing management list according to the user's operation. In order to facilitate subsequent application, after setting the routing management list, the mobile terminal also stores the routing management list in storage mediums, such as a flash memory, a memory, and the like.

As an example, the following Table intuitively shows the set routing management list.

**Table 1**

| Routing device | Network connection parameters | |
|---|---|---|
| | SSID | Connection password |
| A | LuyoushebeiA | 1234 |
| B | LuyoushebeiB | 5678 |
| c | LuyoushebeiC | 3692 |

Based on the pre-stored routing management list, the mobile terminal can, according to the network connection parameters, perform the following steps 2021 to 2022 to determine whether the mobile terminal itself has the management permission for managing the connected routing device.

In step 2021, the mobile terminal matches the network connection parameters against the network connection parameters of each manageable routing device in the routing management list.

In general, the network connection parameters of the connected routing device obtained by the mobile terminal have various types, and only the matching between the network connection parameters having the same type makes sense; therefore, when the network connection parameters are matched against the network connection parameters of each manageable routing device in the routing management list by the mobile terminal respectively, the obtained network connection parameters should be matched against the network connection parameters having the same type in the routing management list. For example, the SSID of the connected routing device is matched with a SSID of each routing device in the routing management list respectively, and the connection password of the connected routing device is matched with a connection password of each routing device in the routing management list respectively.

In step 2022, if the network connection parameters match the network connection parameters of any routing device in the routing management list, the mobile terminal determines that there is the management permission for managing the connected routing device.

When the network connection parameters of the connected routing device fully match the network connection parameters of any routing device in the routing management list, it means that the connected routing device is one of the routing devices in the routing management list, and at this time, the mobile terminal can determine that the mobile terminal itself has the management permission for managing the connected routing device, and then can manage the connected routing device through the following step S203.

Referring to the above Table 1 again, for example, a SSID of a connected routing device is LuyoushebeiA, and a connection password of the connected routing device is 1234. The mobile terminal matches the network connection parameters of the connected routing device against the network connection parameters in the routing management list. Since the network connection parameters of the connected routing device match the network connection parameters of the routing device A in the routing management list, the mobile terminal can determine that itself has the management permission for managing the connected routing device.

It should be noted that since the network connection parameters of the routing device are not fixed, the user may modify the set network connection parameters during usage. When the mobile terminal performs matching of the network connection parameters of the connected routing device against the network connection parameters in the routing management list, the mobile terminal can find no match of the network connection parameters of the connected routing device with the network connection parameters of any routing device in the routing management list, thereby resulting that the mobile terminal misjudges that itself does not have the management permission for managing the connected routing device. In order to avoid this situation, when the mobile terminal determines whether itself has the management permission for managing the connected routing device, if a matching degree between the network connection parameters of the connected routing device and the network connection parameters of any routing device in the routing management list is higher than a specified threshold, it can be determined that the mobile terminal has the management permission for managing the connected routing device. The specified threshold may be 60%, 70%, 80%, and the like, and the embodiment of the present disclosure does not impose specific limitations on the specified threshold.

After the mobile terminal determines that itself does not have the management permission for managing the connected routing device, the mobile terminal will further find another routing device which the mobile terminal has the permission to manage through the following steps S203 to S205.

In step S203, the mobile terminal manages the connected routing device.

After the mobile terminal determines that itself has the management permission for managing the connected routing device, the mobile terminal can access data stored in the connected routing device, control web browsing, control the number of offline users, control bandwidth, and the like.

In step S204, the mobile terminal obtains a first wireless signal list in which device names of routing devices in a current environment are displayed.

When the mobile terminal determines that itself does not have the management permission for managing the connected routing device, the mobile terminal scans WiFi signals in the current environment, obtains the first wireless signal list in which the device names of the routing devices in the current environment are displayed. The device names may be SSIDs of the routing devices.

In step S205, the mobile terminal matches the first wireless signal list again a device name of each routing device in a second wireless signal list which is obtained by the connected routing device from the current environment.

In the field of Internet technologies, the connected routing device scans WiFi signals broadcasted by other routing devices in the current environment, and obtains the second wireless signal list. The device names of other routing devices in the current environment where the connected routing device resides are displayed in the second wireless signal list, and at the same time, the mobile terminal also records the second wireless signal list.

In the present embodiment, by matching the first wireless signal list against a device name of each routing device in a second wireless signal list through the mobile terminal, network environment where the mobile terminal currently resides can be found.

In step S206, if a target routing device in the first wireless signal list matches with the device name of the routing device in the second wireless signal list, and network connection parameters of the target routing device match the network connection parameters of any routing device in the routing management list, the mobile terminal manages the target routing device.

By matching the device name of each routing device in the first wireless signal list against the device name of each routing device in the second wireless signal list, it can be found that there is the target routing device, matching the device name of the routing device in the second wireless signal list, in the first wireless signal list, and it can be determined that the mobile terminal is in the network environment of the target routing device. In order to further determine whether the target routing device is the routing device managed by the mobile terminal, the mobile terminal also matches the network connection parameters of the target routing device against the network connection parameters of any routing device in the routing management list. If the network connection parameters of the target routing device match the network connection parameters of any routing device in the routing management list, or, if a matching degree between the network connection parameters of the target routing device and the network connection parameters of any routing device in the routing management list is higher than a specified threshold, it can be determined that the mobile terminal has the management permission for managing the target routing device, and then the mobile terminal can manage the target routing device.

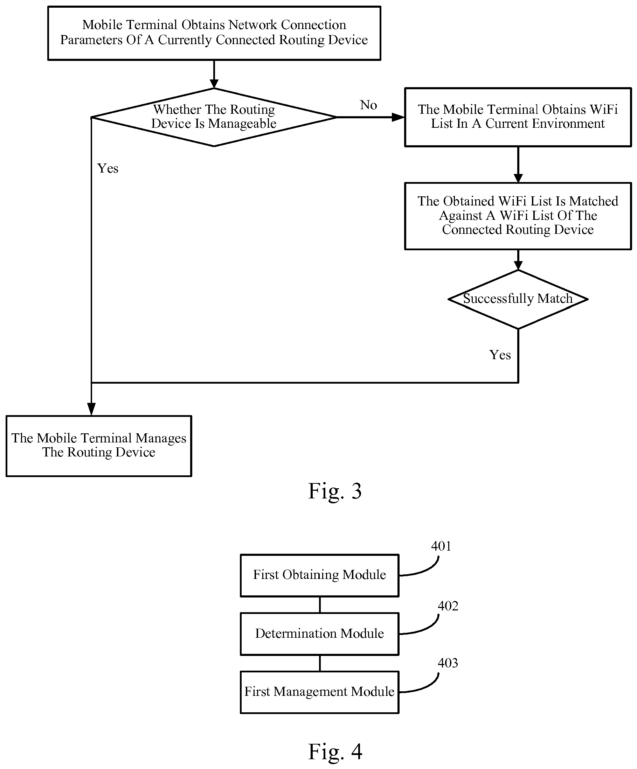

As for above management process of the routing device, the following Fig. 3 is taken as an example to illustrate.

Referring to Fig. 3, when the mobile terminal moves from one place to another, during establishing of a connection with the routing device in the current environment, the mobile terminal can obtain the network connection parameters of the connected routing device, such as the SSID, the connection password, and the like. According to the obtained network connection parameters, if it is determined that the connected routing device is a manageable routing device and the mobile terminal has the management permission for managing the connected routing device, then the mobile terminal can manage the routing device; and if it is determined that the connected routing device is not the manageable routing device and the mobile terminal does not have the management permission for managing the connected routing device, then the mobile terminal obtains a WiFi list in the current environment, and matches the obtained WiFi list against a WiFi list scanned by the connected routing device, when there is a target routing device having the same device name in the WiFi list of the connected routing device in the obtained WiFi list, the mobile terminal manages the target routing device.

In the method provided by embodiments of the present disclosure, the user does not need to switch manually, and the routing device managed by the mobile terminal can be automatically switched according to the network connection parameters of the currently connected routing device. Thus, the complexity for managing the routing device can be reduced, thereby resulting in more convenient way for managing the routing device.

Fig. 4 is a structural block diagram of a mobile terminal according to an exemplary embodiment. Referring to Fig. 4, the mobile terminal includes: a first obtaining module 401, a determination module 402 and a first management module 403.

The first obtaining module 401 is configured to obtain network connection parameters of a currently connected routing device.

The determination module 402 is configured to, according to the network connection parameters, determine whether there is a management permission for managing the connected routing device.

The first management module 403 is configured to, if there is the management permission for managing the connected routing device, manage the connected routing device.

In another embodiment of the present disclosure, the mobile terminal further includes: a processing module.

The processing module is configured to preset and store a routing management list in which network connection parameters of each manageable routing device are identified.

In another embodiment of the present disclosure, the determination module 402 is configured to match the network connection parameters with the network connection parameters of each manageable routing device in the routing management list respectively; and if the network connection parameters match with the network connection parameters of any routing device in the routing management list, determine that there is the management permission for managing the connected routing device.

In another embodiment of the present disclosure, the mobile terminal further includes: a second obtaining module, a matching module and a second management module.

The second obtaining module is configured to, if there is not the management permission for managing the connected routing device, obtain a first wireless signal list in which device names of routing devices in a current environment are displayed.

The matching module is configured to match the first wireless signal list with a device name of each routing device in a second wireless signal list which is obtained by the connected routing device from the current environment.

The second management module is configured to, if a target routing device in the first wireless signal list matches with the device name of the routing device in the second wireless signal list, and network connection parameters of the target routing device match with the network connection parameters of any routing device in the routing management list, manage the target routing device.

In another embodiment of the present disclosure, the network connection parameters include at least a service set identifier SSID and a connection password.

In the mobile terminal provided by embodiments of the present disclosure, the user does not need to switch manually, and the routing device managed by the mobile terminal can be automatically switched according to the network connection parameters of the currently connected routing device. Thus, the complexity for managing the routing device can be reduced, thereby resulting in more convenient way for managing the routing device.

With respect to the devices in the above embodiments, the specific manners for performing operations for individual modules therein have been described in detail in the embodiments regarding the methods, which will not be elaborated herein.

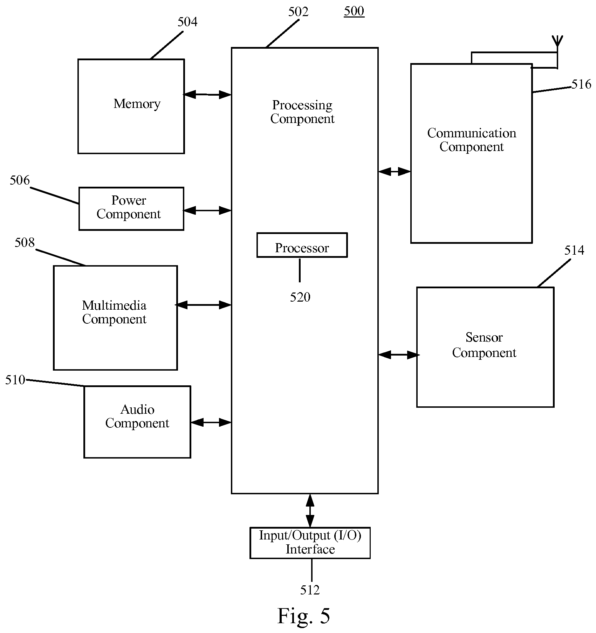

Fig. 5 is a block diagram of an apparatus 500 for managing a routing device according to an exemplary embodiment. For example, the apparatus 500 may be a mobile phone, a computer, a digital broadcast terminal, a messaging device, a gaming console, a tablet, a medical device, exercise equipment, a personal digital assistant, and the like.

Referring to Fig. 5, the apparatus 500 may include one or more of the following components: a processing component 502, a memory 504, a power component 506, a multimedia component 508, an audio component 510, an input/output (I/O) interface 512, a sensor component 514, and a communication component 516.

The processing component 502 typically controls overall operations of the apparatus 500, such as the operations associated with display, telephone calls, data communications, camera operations, and recording operations. The processing component 502 may include one or more processors 520 to execute instructions to perform all or part of the steps in the above described methods. Moreover, the processing component 502 may include one or more modules which facilitate the interaction between the processing component 502 and other components. For instance, the processing component 502 may include a multimedia module to facilitate the interaction between the multimedia component 508 and the processing component 502.

The memory 504 is configured to store various types of data to support the operation of the apparatus 500. Examples of such data include instructions for any applications or methods operated on the apparatus 500, contact data, phonebook data, messages, pictures, video, etc. The memory 504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the apparatus 500. The power component 506 may include a power management system, one or more power sources, and any other components associated with the generation, management, and distribution of power in the apparatus 500.

The multimedia component 508 includes a screen providing an output interface between the apparatus 500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 508 includes a front camera and/or a rear camera. The front camera and the rear camera may receive an external multimedia datum while the apparatus 500 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone ("MIC") configured to receive an external audio signal when the apparatus 500 is in an operation mode, such as a call mode, a recording mode, and a voice recognition mode. The received audio signal may be further stored in the memory 504 or transmitted via the communication component 516. In some embodiments, the audio component 510 further includes a speaker to output audio signals.

The I/O interface 512 provides an interface between the processing component 502 and peripheral interface modules, such as a keyboard, a click wheel, buttons, and the like. The buttons may include, but are not limited to, a home button, a volume button, a starting button, and a locking button.

The sensor component 514 includes one or more sensors to provide status assessments of various aspects of the apparatus 500. For instance, the sensor component 514 may detect an open/closed status of the apparatus 500, relative positioning of components, e.g., the display and the keypad, of the apparatus 500, a change in position of the apparatus 500 or a component of the apparatus 500, a presence or absence of user contact with the apparatus 500, an orientation or an acceleration/deceleration of the apparatus 500, and a change in temperature of the apparatus 500. The sensor component 514 may include a proximity sensor configured to detect the presence of nearby objects without any physical contact. The sensor component 514 may also include a light sensor, such as a CMOS or CCD image sensor, for use in imaging applications. In some embodiments, the sensor component 514 may also include an accelerometer sensor, a gyroscope sensor, a magnetic sensor, a pressure sensor, or a temperature sensor.

The communication component 516 is configured to facilitate communication, wired or wirelessly, between the apparatus 500 and other devices. The apparatus 500 can access a wireless network based on a communication standard, such as WiFi, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technolo gies.

In exemplary embodiments, the apparatus 500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as the memory 504 including instructions executable by the processor 520 in the apparatus 500, for performing the above-described methods. For example, the non-transitory computer-readable storage medium may be a ROM, a RAM, a CD-ROM, a magnetic tape, a floppy disc, an optical data storage device, and the like.

In the apparatus provided by embodiments of the present disclosure, the user does not need to switch manually, and the routing device managed by the mobile terminal can be automatically switched according to the network connection parameters of the currently connected routing device. Thus, the complexity for managing the routing device can be reduced, thereby resulting in more convenient way for managing the routing device.

A non-transitory computer-readable storage medium having stored therein instructions that, when executed by a processor of a mobile terminal, causes the mobile terminal to perform above method for managing a routing device. The method includes:
obtaining, by a mobile terminal, network connection parameters of a currently connected routing device;
according to the network connection parameters, determining, by the mobile terminal, whether there is a management permission for managing the connected routing device; and
if there is the management permission for managing the connected routing device, managing, by the mobile terminal, the connected routing device.

In another embodiment of the present disclosure, before determining, by the mobile terminal, whether there is the management permission for managing the connected routing device according to the network connection parameters, the method further includes:
presetting and storing, by the mobile terminal, a routing management list in which network connection parameters of each manageable routing device are identified.

In another embodiment of the present disclosure, the determining, by the mobile terminal, whether there is the management permission for managing the connected routing device according to the network connection parameters includes:
matching, by the mobile terminal, the network connection parameters with the network connection parameters of each manageable routing device in the routing management list respectively; and
if the network connection parameters match with the network connection parameters of any routing device in the routing management list, determining, by the mobile terminal, that there is the management permission for managing the connected routing device.

In another embodiment of the present disclosure, after determining, by the mobile terminal, whether there is the management permission for managing the connected routing device according to the network connection parameters, the method further includes:
if there is not the management permission for managing the connected routing device, obtaining, by the mobile terminal, a first wireless signal list in which device names of routing devices in a current environment are displayed;
matching, by the mobile terminal, the first wireless signal list with a device name of each routing device in a second wireless signal list which is obtained by the connected routing device from the current environment; and
if a target routing device in the first wireless signal list matches with the device name of the routing device in the second wireless signal list, and network connection parameters of the target routing device match with the network connection parameters of any routing device in the routing management list, managing, by the mobile terminal, the target routing device.

In another embodiment of the present disclosure, the network connection parameters include at least a service set identifier SSID and a connection password.

In the non-transitory computer-readable storage medium provided by embodiments of the present disclosure, the user does not need to switch manually, and the routing device managed by the mobile terminal can be automatically switched according to the network connection parameters of the currently connected routing device. Thus, the complexity for managing the routing device can be reduced, thereby resulting in more convenient way for managing the routing device.

## Claims

1. A method for managing a routing device, comprising:
obtaining (101, 201), by a mobile terminal, network connection parameters of a currently connected routing device;
presetting and storing, by the mobile terminal, a routing management list in which network connection parameters of each manageable routing device are identified;
according to the network connection parameters, determining (102, 202), by the mobile terminal, whether there is a management permission for managing the connected routing device; and
wherein if there is the management permission for managing the connected routing device, managing (103, 203), by the mobile terminal, the connected routing device; and if there is not the management permission for managing the connected routing device:
obtaining (204), by the mobile terminal, a first wireless signal list in which device names of routing devices in a current environment are displayed;
receiving and recording, at the mobile terminal, a second wireless signal list which has been obtained by the connected routing device from the current environment;
matching (205), by the mobile terminal, the first wireless signal list with a device name of each routing device in the second wireless signal list which is obtained by the connected routing device from the current environment; and
if a target routing device in the first wireless signal list matches with the device name of the routing device in the second wireless signal list, and network connection parameters of the target routing device match with the network connection parameters of any routing device in the routing management list, managing (206), by the mobile terminal, the target routing device.

2. The method according to claim 1, wherein the determining (102, 202), by the mobile terminal, whether there is the management permission for managing the connected routing device according to the network connection parameters comprises:
matching, by the mobile terminal, the network connection parameters with the network connection parameters of each manageable routing device in the routing management list respectively; and
if the network connection parameters match with the network connection parameters of any routing device in the routing management list, determining, by the mobile terminal, that there is the management permission for managing the connected routing device.

3. The method according to any one of the preceding claims, wherein the network connection parameters comprise at least a service set identifier SSID and a connection password.

4. A mobile terminal, comprising:
a first obtaining module (401) configured to obtain network connection parameters of a currently connected routing device;
a processing module configured to preset and store a routing management list in which network connection parameters of each manageable routing device are identified;
a determination module (402) configured to, according to the network connection parameters, determine whether there is a management permission for managing the connected routing device;
a first management module (403) configured to, if there is the management permission for managing the connected routing device, manage the connected routing device;
a second obtaining module configured to, if there is not the management permission for managing the connected routing device, obtain a first wireless signal list in which device names of routing devices in a current environment are displayed
a receiving module configured to receive and record, at the mobile terminal, a second wireless signal list which has been obtained by the connected routing device from the current environment;
a matching module configured to match the first wireless signal list with a device name of each routing device in a second wireless signal list which is obtained by the connected routing device from the current environment; and
a second management module configured to, if a target routing device in the first wireless signal list matches with the device name of the routing device in the second wireless signal list, and network connection parameters of the target routing device match with the network connection parameters of any routing device in the routing management list, manage the target routing device.

5. The mobile terminal according to claim 4, wherein the determination module (402) is configured to match the network connection parameters with the network connection parameters of each manageable routing device in the routing management list respectively; and if the network connection parameters match with the network connection parameters of any routing device in the routing management list, determine that there is the management permission for managing the connected routing device.

6. The mobile terminal according to claim 4 or claim 5, wherein the network connection parameters comprise at least a service set identifier SSID and a connection password.

7. A non-transitory computer-readable medium having a computer program recorded thereon including instructions for executing the steps of the method according to any one of claims 1 to 3.

## Patentansprüche

1. Verfahren zum Verwalten einer Routingvorrichtung, das Folgendes aufweist:
Erhalten (101, 201) von Netzwerkverbindungsparametern einer aktuell angeschlossenen Routingvorrichtung durch ein Mobilendgerät;
Voreinstellen und Speichern einer Routingmanagementliste durch das Mobilendgerät, in welcher die Netzwerkverbindungsparameter jeder verwaltbaren Routingvorrichtung bezeichnet werden;
gemäß den Netzwerkverbindungsparametern Bestimmen (102, 202) durch das Mobilendgerät, ob es eine Verwaltungsberechtigung zum Verwalten der angeschlossenen Routingvorrichtung gibt; und
**gekennzeichnet durch** Verwalten (103, 203) der angeschlossenen Routingvorrichtung durch das Mobilendgerät, wenn es die Verwaltungsberechtigung zum Verwalten der angeschlossenen Routingvorrichtung gibt; und, wenn es die Verwaltungsberechtigung zum Verwalten der angeschlossenen Routingvorrichtung nicht gibt:
Erhalten (204) einer ersten Liste kabelloser Signale durch das Mobilendgerät, in der Vorrichtungsnamen von Routingvorrichtungen in einer aktuellen Umgebung angezeigt werden;
Empfangen und Aufzeichnen einer zweiten Liste kabelloser Signale an dem Mobilendgerät, die durch die angeschlossene Routingvorrichtung aus der aktuellen Umgebung erhalten wurde;
Abstimmen (205) der ersten Liste kabelloser Signale durch das Mobilendgerät mit einem Vorrichtungsnamen jeder Routingvorrichtung in der zweiten Liste kabelloser Signale, die durch die angeschlossene Routingvorrichtung aus der aktuellen Umgebung erhalten wird; und,
wenn eine Ziel-Routingvorrichtung in der ersten Liste kabelloser Signale mit dem Vorrichtungsnamen der Routingvorrichtung in der zweiten Liste kabelloser Signale übereinstimmt und Netzwerkverbindungsparameter der Ziel-Routingvorrichtung mit den Netzwerkverbindungsparametern irgendeiner Routingvorrichtung in der Routingverwaltungsliste übereinstimmen, Verwalten (206) der Ziel-Routingvorrichtung durch das Mobilendgerät.

2. Verfahren nach Anspruch 1, wobei das Bestimmen (102, 202) durch das Mobilendgerät, ob es die Verwaltungsberechtigung zum Verwalten der angeschlossenen Routingvorrichtung gemäß den Netzwerkverbindungsparametern gibt, Folgendes aufweist:
jeweiliges Abstimmen der Netzwerkverbindungsparameter durch das Mobilendgerät mit den Netzwerkverbindungsparametern jeder verwaltbaren Routingvorrichtung in der Routingverwaltungsliste; und,
wenn die Netzwerkverbindungsparameter mit den Netzwerkverbindungsparametern irgendeiner Routingvorrichtung in der Routingverwaltungsliste übereinstimmen, Bestimmen durch das Mobilendgerät, dass es die Verwaltungsberechtigung zum Verwalten der angeschlossenen Routingvorrichtung gibt.

3. Verfahren nach einem der vorhergehenden Ansprüche, wobei die Netzwerkverbindungsparameter wenigstens einen Service Set Identifier SSID und ein Verbindungspasswort aufweisen.

4. Mobilendgerät, das Folgendes aufweist:
ein erstes Erhaltemodul (401), das zum Erhalten von Netzwerkverbindungsparametern einer aktuell angeschlossenen Routingvorrichtung konfiguriert ist;
ein Verarbeitungsmodul, das zum Voreinstellen und Speichern einer Routingmanagementliste konfiguriert ist, in welcher Netzwerkverbindungsparameter jeder verwaltbaren Routingvorrichtung bezeichnet werden;
ein Bestimmungsmodul (402), das zum Bestimmen gemäß den Netzwerkverbindungsparametern, ob es eine Verwaltungsberechtigung zum Verwalten der angeschlossenen Routingvorrichtung gibt, konfiguriert ist;
ein erstes Verwaltungsmodul (403), das zum Verwalten der angeschlossenen Routingvorrichtung konfiguriert ist, wenn es die Verwaltungsberechtigung zum Verwalten der angeschlossenen Routingvorrichtung gibt;
ein zweites Erhaltemodul, das konfiguriert ist zum Erhalten einer ersten Liste kabelloser Signale, in der Vorrichtungsnamen von Routingvorrichtungen in einer aktuellen Umgebung angezeigt werden, wenn es die Verwaltungsberechtigung zum Verwalten der angeschlossenen Routingvorrichtung nicht gibt;
ein Empfangsmodul, das zum Empfangen und Aufzeichnen einer zweiten Liste kabelloser Signale an dem Mobilendgerät konfiguriert ist, die durch die angeschlossene Routingvorrichtung aus der aktuellen Umgebung erhalten wird;
ein Abstimmungsmodul, das zum Abstimmen der ersten Liste kabelloser Signale mit einem Vorrichtungsnamen jeder Routingvorrichtung in einer zweiten Liste kabelloser Signale, die durch die angeschlossene Routingvorrichtung aus der aktuellen Umgebung erhalten wurde, konfiguriert ist; und
ein zweites Verwaltungsmodul, das konfiguriert ist zum Verwalten der Ziel-Routingvorrichtung, wenn eine Ziel-Routingvorrichtung in der ersten Liste kabelloser Signale mit dem Vorrichtungsnamen der Routingvorrichtung in der zweiten Liste kabelloser Signale übereinstimmt und Netzwerkverbindungsparameter der Ziel-Routingvorrichtung mit den Netzwerkverbindungsparametern irgendeiner Routingvorrichtung in der Routingverwaltungsliste übereinstimmen.

5. Mobilendgerät nach Anspruch 4, wobei das Bestimmungsmodul (402) konfiguriert ist zum jeweiligen Abstimmen der Netzwerkverbindungsparameter mit den Netzwerkverbindungsparametern jeder verwaltbaren Routingvorrichtung in der Routingverwaltungsliste; und, wenn die Netzwerkverbindungsparameter mit den Netzwerkverbindungsparametern irgendeiner Routingvorrichtung in der Routingverwaltungsliste übereinstimmen, Bestimmen, dass es die Verwaltungsberechtigung zum Verwalten der angeschlossenen Routingvorrichtung gibt.

6. Mobilendgerät nach Anspruch 4 oder Anspruch 5, wobei die Netzwerkverbindungsparameter wenigstens einen Service Set Identifier SSID und ein Verbindungspasswort aufweisen.

7. Nichtflüchtiges computerlesbares Medium, auf dem ein Computerprogramm aufgezeichnet ist, das Anweisungen zum Ausführen der Schritte des Verfahrens nach einem der Ansprüche 1 bis 3 beinhaltet.

## Revendications

1. Procédé de gestion d'un dispositif de routage, comprenant :
obtenir (101, 201), par un terminal mobile, des paramètres de connexion réseau d'un dispositif de routage actuellement connecté ;
prérégler et stocker, par le terminal mobile, une liste de gestion de routage dans laquelle les paramètres de connexion réseau de chaque dispositif de routage gérable sont identifiés ;
conformément aux paramètres de connexion réseau, déterminer (102, 202), par le terminal mobile, s'il y a une autorisation de gestion pour gérer le dispositif de routage connecté ; et
dans lequel s'il y a une autorisation de gestion pour gérer le dispositif de routage connecté, gérer (103, 203), par le terminal mobile, le dispositif de routage connecté ; et s'il n'y a pas d'autorisation de gestion pour gérer le dispositif de routage connecté :
obtenir (204), par le terminal mobile, une première liste de signaux sans fil dans laquelle les noms de dispositifs des dispositifs de routage dans un environnement courant sont affichés ;
recevoir et enregistrer, au terminal mobile, une deuxième liste de signaux sans fil qui a été obtenue par le dispositif de routage connecté de l'environnement courant ;
faire concorder (205), par le terminal mobile, la première liste de signaux sans fil avec un nom de dispositif de chaque dispositif de routage dans la deuxième liste de signaux sans fil qui est obtenue par le dispositif de routage connecté de l'environnement courant ; et
si un dispositif de routage cible dans la première liste de signaux sans fil concorde avec le nom de dispositif du dispositif de routage dans la deuxième liste de signaux sans fil, et que les paramètres de connexion réseau du dispositif de routage cible concordent avec les paramètres de connexion réseau d'un dispositif de routage quelconque dans la liste de gestion de routage, gérer (206), par le terminal mobile, le dispositif de routage cible.

2. Procédé selon la revendication 1, dans lequel le fait de déterminer (102, 202), par le terminal mobile, s'il y a l'autorisation de gestion pour gérer le dispositif de routage connecté conformément aux paramètres de connexion réseau, comprend :
faire concorder, par le terminal mobile, les paramètres de connexion réseau avec les paramètres de connexion réseau de chaque dispositif de routage gérable respectivement dans la liste de gestion de routage ; et
si les paramètres de connexion réseau concordent avec les paramètres de connexion réseau d'un dispositif de routage quelconque dans la liste de gestion de routage, déterminer, par le terminal mobile, qu'il y a l'autorisation de gestion pour gérer le dispositif de routage connecté.

3. Procédé selon l'une quelconque des revendications précédentes, dans lequel les paramètres de connexion réseau comprennent au moins un identifiant d'ensemble de services SSID et un mot de passe de connexion.

4. Terminal mobile, comprenant :
un premier module d'obtention (401) configuré pour obtenir des paramètres de connexion réseau d'un dispositif de routage actuellement connecté ;
un module de traitement configuré pour prérégler et stocker une liste de gestion de routage dans laquelle les paramètres de connexion réseau de chaque dispositif de routage gérable sont identifiés ;
un module de détermination (402) configuré pour, conformément aux paramètres de connexion réseau, déterminer s'il y a une autorisation de gestion pour gérer le dispositif de routage connecté ;
un premier module de gestion (403) configuré pour, s'il y a l'autorisation de gestion pour gérer le dispositif de routage connecté, gérer le dispositif de routage connecté ;
un deuxième module d'obtention configuré pour, s'il n'y a pas l'autorisation de gestion pour gérer le dispositif de routage connecté, obtenir une première liste de signaux sans fil dans laquelle les noms de dispositifs des dispositifs de routage dans un environnement courant sont affichés ;
un module de réception configuré pour recevoir et enregistrer, au terminal mobile, une deuxième liste de signaux sans fil qui a été obtenue par le dispositif de routage connecté de l'environnement courant ;
un module de concordance configuré pour faire concorder la première liste de signaux sans fil avec un nom de dispositif de chaque dispositif de routage dans une deuxième liste de signaux sans fil qui est obtenue par le dispositif de routage connecté de l'environnement courant ; et
un deuxième module de gestion configuré pour, si un dispositif de routage cible dans la première liste de signaux sans fil concorde avec le nom de dispositif du dispositif de routage dans la deuxième liste de signaux sans fil, et que les paramètres de connexion réseau du dispositif de routage cible concordent avec les paramètres de connexion réseau d'un dispositif de routage quelconque dans la liste de gestion de routage, gérer le dispositif de routage cible.

5. Terminal mobile selon la revendication 4, dans lequel le module de détermination (402) est configuré pour faire concorder les paramètres de connexion réseau avec les paramètres de connexion réseau de chaque dispositif de routage gérable respectivement dans la liste de gestion de routage ; et si les paramètres de connexion réseau concordent avec les paramètres de connexion réseau d'un dispositif de routage quelconque dans la liste de gestion de routage, déterminer qu'il y a l'autorisation de gestion pour gérer le dispositif de routage connecté.

6. Terminal mobile selon la revendication 4 ou la revendication 5, dans lequel les paramètres de connexion réseau comprennent au moins un identifiant d'ensemble de services SSID et un mot de passe de connexion.

7. Support non transitoire lisible par ordinateur ayant un programme informatique enregistré dessus comprenant des instructions pour exécuter les étapes du procédé selon l'une quelconque des revendications 1 à 3.
